# EUROPEAN PATENT SPECIFICATION

(11) **EP 4 400 820 B1**
(45) Date of publication and mention of the grant of the patent: **28.01.2026**
(21) Application number: 22866592.3
(22) Date of filing: 06.09.2022
(51) Int. Cl.: G01K 7/22, G01K 5/62, G01K 1/143, B60L 53/16

(54) **TEMPERATURE MEASURING STRUCTURE, CHARGING DEVICE, AND MOTOR VEHICLE**
TEMPERATURMESSSTRUKTUR, LADEVORRICHTUNG UND KRAFTFAHRZEUG
STRUCTURE DE MESURE DE TEMPÉRATURE, DISPOSITIF DE CHARGE ET VÉHICULE À MOTEUR

(30) Priority: 07.09.2021 CN 202111045635
(43) Date of publication of application: 17.07.2024
(73) Proprietor: Changchun Jetty Automotive Technology Co., Ltd., Changchun, Jilin 130000 (CN)
(72) Inventor: WANG, Chao, Changchun, Jilin 130000 (CN)
(74) Representative: Habermann, Hruschka & Schnabel
(86) International application number: PCT/CN2022/117271
(87) International publication number: WO 2023/036129

(56) References cited:
- CN-A- 105 953 937
- CN-A- 111 537 094
- CN-A- 111 537 094
- CN-A- 113 639 889
- CN-U- 209 014 341
- CN-U- 209 014 341
- CN-U- 213 812 614
- CN-U- 216 283 996
- JP-A- 2014 173 927
- JP-A- 2019 100 952
- US-A- 5 765 075
- US-A- 5 765 075
- US-A1- 2018 364 108

## Description

The present disclosure claims priority to Chinese Patent Application No. 202111045635.X, entitled "TEMPERATURE MEASURING STRUCTURE, CHARGING DEVICE AND MOTOR VEHICLE" as filed on September 7, 2021.

### TECHNICAL FIELD

The present disclosure relates to the field of electrical connections, in particular to a temperature measuring structure, a charging device and a motor vehicle.

### BACKGROUND

At present, both the charging gun head and the charging socket of new energy vehicles have a charging terminal with a plug-in structure, and the charging terminal is secured on the terminal holder of charging gun head or the terminal holder of the charging socket. In a case where the automobile is charging, the current at the charging terminal increases rapidly and the generated heat rises sharply. Therefore, for safety reasons, a temperature measurement device is provided at the charging terminal by multiple manufacturers. The contact-type temperature measurement device is simple, reliable and has high measurement accuracy. However, the temperature measurement device must be in contact with the measured medium before the temperature can be measured. The installed charging terminal needs to maintain a pressure with the temperature measurement device, to measure the temperature of the charging terminal more accurately. clamping seats

The existing method of installing the temperature measurement device refers to attaching the charging terminal to the temperature measurement device after installing the charging terminal, however, the contacted area actually has a plurality of tiny gaps due to the lack of pressure between the charging terminal and the temperature measurement device, the temperature of the charging terminal cannot be accurately measured, the temperature control system cannot adjust the temperature of the charging system in time, resulting in the excessive temperature rise of the charging system triggering charging failure. A temperature sensor is known from the prior art, for example from US2018/364108A1. A support and temperature detection device are known from the prior art, for example from CN209014341U. An end-face thermal resistor is known from the prior art, for example from CN111537094A. A temperature sensor and method and apparatus for using the temperature sensor and fixing apparatus in combination with a temperature sensor are known from the prior art, for example from US5765075A.

Therefore, there exists in the prior art an urgent need for a temperature measuring structure in which a temperature measurement device is in close contact with a measured medium to accurately measure the temperature of the measured medium.

### SUMMARY

The present invention is defined by the independent claims. Further embodiments are set forth in the dependent claims. Any references to inventions or embodiments not falling within the scope of the independent claims are to be interpreted as examples useful for understanding the invention. In order to provide pressure between the temperature sensor and the charging terminal immediately after the charging terminal is installed, the present disclosure provides a temperature measuring structure, including: a support and a temperature measurement element, and the support has a first surface, the first surface is provided with an area accommodating the temperature measurement element; the temperature measurement element has a temperature measurement face, the temperature measurement face at least partially protrudes from the first surface, and the temperature measurement face is at a variable angle to the first surface.

In some embodiments, the angle between the temperature measurement face and the first surface is of 1° to 27°.

In some embodiments, a height of the temperature measurement face protruding from the first surface is of 1% to 30% of a thickness of the temperature measurement element.

In some embodiments, the area is provided with a groove in which the temperature measurement element is at least partially accommodated.

In some embodiments, the support further has a first end face to which the groove penetrates.

In some embodiments, the first end face is further provided with a slot, and the slot is provided on both sides of the groove.

In some embodiments, one end of the temperature measurement element has two opposite rotation shafts, and the rotation shafts are provided in the slot.

In some embodiments, the temperature measurement element has two opposite second surfaces, and the rotation shafts are respectively vertically provided on the second surfaces.

In some embodiments, the temperature measurement element has a second end face provided with the rotation shaft, and the rotation shaft is extended perpendicular to the second surface.

In some embodiments, the slot has a third surface, and the third surface is a face parallel to and at the shortest distance from the first surface.

In some embodiments, a distance from the first surface to an edge of the rotation shaft is less than a distance from the first surface to the third surface.

In some embodiments, the distance from the first surface to the edge of the rotation shaft is 0.5 times to 0.8 times of the distance from the first surface to the third surface.

In some embodiments, the rotation shaft is flexible.

In some embodiments, the groove has a bottom face, the bottom face is provided with a jaw, the hook is disposed on the jaw, and the hook protrudes from the bottom face.

In some embodiments, the hook has a limiting face which is perpendicular to the bottom face or is an acute angle to the bottom face.

In some embodiments, the temperature measurement element has a second end face, and the limiting face is in contact with the second end face to restrict the temperature measurement element from detaching from the groove.

In some embodiments, the jaw is flexible and the hook is not protruded from the bottom face under external force.

In some embodiments, a cross-sectional shape of the temperature measurement element perpendicular to the temperature measurement face is rectangle, a quadrangle and a polygon.

In some embodiments, a width of the groove is greater than or equal to a widest portion of the temperature measurement element parallel to the temperature measurement face.

In some embodiments, a cross-sectional shape of the rotation shaft is a circle, an ellipse, a flat, a triangle, a rectangle, a quadrangle and a polygon.

In some embodiments, the temperature measurement element is an NTC temperature sensor or a PTC temperature sensor.

In some embodiments, the temperature measurement element is a bimetallic temperature sensor.

In some embodiments, when a change in temperature of an outside is 1° C, a deformation of metal of the bimetallic temperature sensor is less than or equal to 1mm.

In some embodiments, the temperature measurement element has a metal housing, and a material of the metal housing comprises silver or copper.

The present disclosure also provides a charging device, including a measured object and the above temperature measuring structure.

In some embodiments, when assembling the charging device, the temperature measurement element abuts against the measured object, and the temperature measurement face is in close contact with the measured object and applies pressure to the measured object, the temperature measurement element measures a temperature of the measured object.

In some embodiments, a contact area between the temperature measurement face and the measured object is 0.1% to 95% of a surface area of the measured object.

In some embodiments, the contact area between the temperature measurement face and the measured object is 1% to 85% of the surface area of the measured object.

In some embodiments, the pressure applied by the temperature measurement face to the measured object is 5N to 98N.

The present disclosure also provides a motor vehicle including: the above temperature measuring structure or the above charging device.

The present disclosure has advantageous effects:
1. The temperature measuring structure provided by the present disclosure is capable of tightly attaching the temperature measurement face of the temperature measurement element to the measured object, the temperature measurement face is capable of applying a pressure to the measured object without the aid of an additional device, so that the temperature measurement element can obtain the temperature data closest to the actual temperature of the measured object, thus the staff or the corresponding processor can be aware of the temperature of the measured object more timely and accurately, thereby preventing the situation in which the temperature measurement face is separated from the measured object in subsequent use of the temperature measurement element, or the situation in which the temperature measurement face cannot be continuously contacted to the measured object, so that the temperature cannot be accurately measured.
2. The temperature measuring structure provided by the present disclosure breaks the conventional practice of setting the temperature measurement face parallel to a plane of the measured object, then attaching the temperature measurement face to the plane of the measured object, instead, the temperature measurement face protrudes from the temperature measuring structure and is at a variable angle to the plane of the measured object, so that the temperature measurement face is flattened by the measured object to generate a relative reaction force, and a relative pressure exists between the temperature measurement face and the measured object, thus the closer attachment is realized and the actual temperature of the measured object can be more accurately measured.
3. By setting the jaw, the external force may be applied to deform the jaw, without removing the measured object, and the hook on the jaw does not protrude from the bottom face, at this time, the temperature measurement element can be removed from the support, in the subsequent maintenance of the equipment and replacement of the temperature measurement element, the processing steps can be reduced and the time can be saved, thereby facilitating the operation of the staff.

### BRIEF DESCRIPTION OF THE DRAWINGS

The drawings forming a part of the present disclosure are used to provide a further understanding of the present disclosure. The schematic embodiments and description of the present disclosure are used to illustrate the present disclosure and do not constitute an improper limitation to the present disclosure.
FIG. 1 is a structural schematic diagram illustrating a temperature measurement element according to an embodiment of the present disclosure.
FIG. 2 is a structural schematic diagram illustrating a support according to an embodiment of the present disclosure.
FIG. 3 is a structural schematic diagram illustrating a temperature measuring structure according to an embodiment of the present disclosure.
FIG. 4 is another structural schematic diagram illustrating the temperature measuring structure according to an embodiment of the present disclosure.
FIG. 5 is a structural schematic diagram illustrating a profile of a jaw according to an embodiment of the present disclosure.
FIG. 6 is another structural schematic diagram illustrating the temperature measuring structure according to the embodiment of the present disclosure.

### DESCRIPTION OF EMBODIMENTS

It should be noted that in a case of no conflict, the embodiments and the features in the embodiments in the present disclosure can be combined with each other. The present disclosure will be illustrated in detail below with reference to the drawings in combination with the embodiments.

### Embodiment 1

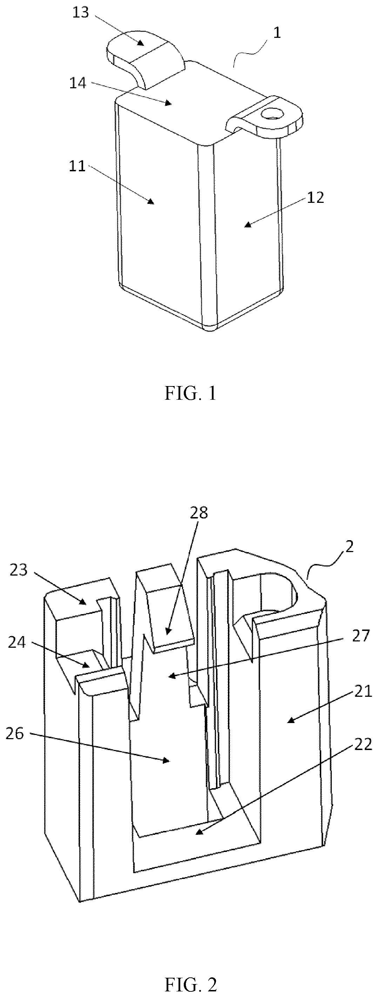

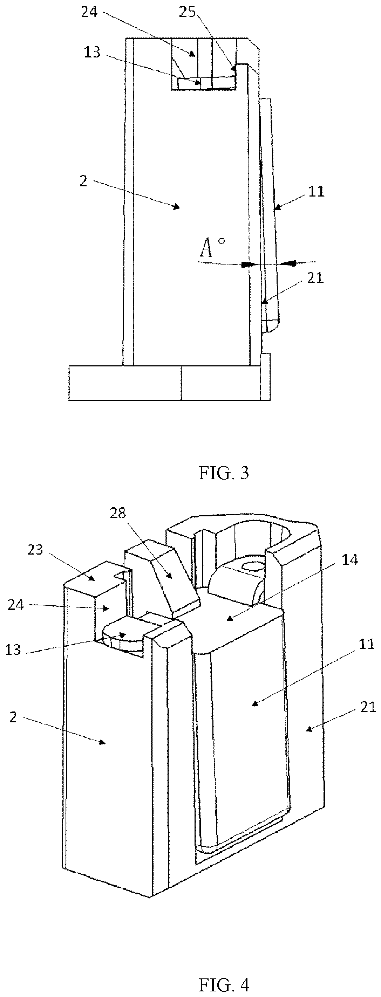

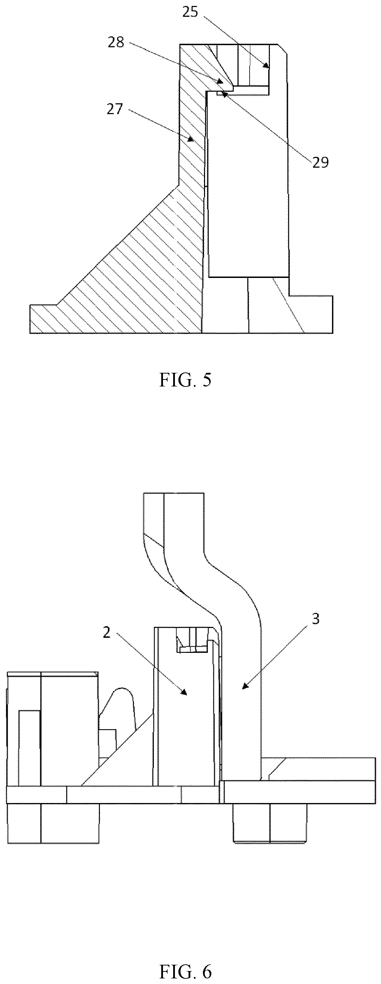

The present disclosure provides a temperature measuring structure, as illustrated in FIGS. 1 to 6, including: a support 2 and a temperature measurement element 1, and the support 2 has a first surface 21, the first surface 21 is provided with a groove 22 for accommodating the temperature measurement element 1, the temperature measurement element 1 has a temperature measurement face 11, the temperature measurement face 11 at least partially protrudes from the first surface 21, and the temperature measurement face 11 is at a variable angle to the first surface 21.

In specific implementation, when the temperature measurement element 1 is provided in the groove, the temperature measurement face 11 protrudes from the first surface 21, and the temperature measurement face 11 of the temperature measurement element 1 is at a variable angle to the first surface 21 on the support 2; after the measured object 3 is installed, the measured object 3 is capable of being in contact with the temperature measurement face 11, and since the temperature measurement face 11 is at an angle to the first surface 21 in an initial state, an interaction force is generated between the measured object 3 and the temperature measurement face 11, which enables the temperature measurement face 11 of the temperature measurement element 1 to be tightly and continuously contacted to the surface of the measured object 3, so that the temperature measurement element 1 can obtain the temperature data closest to the actual temperature of the measured object 3, thus the staff or the corresponding processor can be aware of the temperature of the measured object 3 more timely and accurately, thereby preventing the situation in which the temperature measurement face 11 is separated from the measured object 3 in subsequent use of the temperature measurement element 1, or the situation in which the temperature measurement face 11 cannot be continuously contacted to the measured object 3, so that the temperature cannot be accurately measured.

The temperature measuring structure in this embodiment breaks the conventional practice of setting the temperature measurement face 11 parallel to a plane of the measured object, then attaching the temperature measurement face 11 to the plane of the measured object, instead, the temperature measurement face 11 protrudes from the temperature measuring structure and is at a variable angle to the plane of the measured object, so that the temperature measurement face 11 is flattened by the measured object to generate a relative reaction force, and a relative pressure exists between the temperature measurement face 11 and the measured object, thus the closer attachment is realized and the actual temperature of the measured object can be more accurately measured.

In an embodiment, the angle between the temperature measurement face 11 and the first surface 21 is of 1° to 27°, since in the final assembly, the temperature measurement face 11 of the temperature measurement element 1 is tightly and continuously contacted to the surface of the measured object 3, at this time, the temperature measurement element 1 is extruded by the measured object 3, so that the angle between the temperature measurement face 11 and the first surface 21 decreases, and the temperature measurement element 1 relies on the reaction force of interference between the rotation shaft 13 and the third surface 25 to cause the temperature measurement face 11 to apply pressure to the measured object 3, the greater the change in angle is, the greater the applied pressure is.

In order to verify the effects of the angle between the temperature measurement face 11 and the first surface 21, on the pressure applied by the temperature measurement face 11 to the measured object 3 and the temperature drift value of the temperature of the measured object 3 measured by the temperature measurement element 1, the inventors selects the supports 2 with the same size and specification, the same temperature measurement element 1, and different angles between the temperature measurement face 11 and the first surface 21, and testes the pressure applied and the temperature drift value of the temperature of the measured object 3 measured by the temperature measurement element 1 when the angle between the temperature measurement face 11 and the first surface 21 is 0°, all of which are recorded in Table 1.

Method of measuring pressure refers to abutting a measurement end against a highest end of the temperature measurement face 11 by using a precision push-pull gauge, and then reading a value displayed on the precision push-pull gauge when the angle between the temperature measurement face 11 and the first surface 21 is from an initial angle to 0°.

Method of measuring a temperature drift value refers to precisely attaching another precision temperature sensor to the measured object 3, and if necessary, applying heat-conducting silicon grease on the contacted surface for more accurate temperature measurement, then reading the displayed temperature values of the precision temperature sensor and the temperature measurement element 1, respectively, at different angles between the temperature measurement face 11 and the first surface 21, and taking an absolute value of its difference as a temperature drift value of a current angle.

In this embodiment, a pressure in the 5N to 98N is qualified. If the pressure is too small, the temperature measurement face 11 cannot be tightly contacted to the measured object 3, and if the pressure is too high, the temperature measurement element 1 may be damaged. The temperature drift value less than 10K is a qualified value. If the temperature drift value is greater than 10K, the actual temperature of the measured object 3 is quite different from the temperature measured by the temperature measurement element 1, thus the actual temperature of the measured object 3 cannot be obtained in time. The temperature control system cannot adjust the temperature of the system in time, resulting in the system temperature rise is excessive and trigger the functional failure.

**Table 1: Effects of the angle between the temperature measurement face and the first surface, on the pressure applied by the temperature measurement face to the measured object and the temperature drift value**

| the angle between the temperature measurement face 11 and the first surface 21 (°) | | | | | | | | | | | | | |
|---|---|---|---|---|---|---|---|---|---|---|---|---|---|
| 0.5 | 1 | 3 | 5 | 10 | 13 | 15 | 18 | 20 | 23 | 25 | 27 | 28 | 30 |

| the pressure applied when the angle between the temperature measurement face 11 and the first surface 21 is 0 ° (N) | | | | | | | | | | | | | |
|---|---|---|---|---|---|---|---|---|---|---|---|---|---|
| 3 | 5 | 8 | 11 | 23 | 34 | 48 | 61 | 75 | 86 | 94 | 98 | 108 | 116 |

| the temperature drift value of the temperature of the measured object 3 measured by the temperature measurement element 1 (K) | | | | | | | | | | | | | |
|---|---|---|---|---|---|---|---|---|---|---|---|---|---|
| 10.6 | 9.8 | 9.2 | 8.6 | 7.5 | 6.7 | 5.8 | 4.7 | 3.1 | 2.3 | 1.9 | 1.4 | 0.9 | 0.4 |

As can be seen from the Table 1, when the angle between the temperature measurement face 11 and the first surface 21 is greater than 27°, the pressure applied when the angle between the temperature measurement face 11 and the first surface 21 is 0° exceeds 98N, at this time, the temperature measurement element 1 is subjected to excessive pressure, and thus is easily damaged. When the angle between the temperature measurement face 11 and the first surface 21 is less than 1°, the pressure applied when the angle between the temperature measurement face 11 and the first surface 21 is 0° is less than 5N, at this time, the temperature measurement face 11 and the measured object 3 cannot be tightly contacted, and the actual temperature of the measured object 3 cannot be accurately measured. In addition, when the angle between the temperature measurement face 11 and the first surface 21 is 0°, the temperature drift value of the temperature of the measured object 3 measured by the temperature measurement element 1 is greater than 10K, at this time, the actual temperature of the measured object 3 is significantly different from the temperature measured by the temperature measurement element 1, thus the actual temperature of the measured object 3 cannot be obtained in time. The larger the angle is, the smaller the temperature drift value is, which is different from the common perception of the public, it is not that the contact surfaces are parallel and the temperature measurement is more accurate. But, the contact surfaces are at a variable angle, and a relative pressure exists after the contact and being flattened, such that the gap of the contact surface becomes smaller and the temperature drift value is reduced. Therefore, the inventors set the angle between the temperature measurement face 11 and the first surface 21 to be 1° to 27°.

In an embodiment, a height of the temperature measurement face 11 protruding from the first surface 21 is of 1% to 30% of a thickness of the temperature measurement element 1. In order to verify the effects of the height of the temperature measurement face 11 protruding from the first surface 21 on the pressure applied by the temperature measurement face 11 to the measured object 3, and the temperature drift value of the temperature of the measured object 3 measured by the temperature measurement element 1, the inventors selects the supports 2 with the same size and specification, the same temperature measurement element 1, and different heights of the temperature measurement face 11 protruding from the first surface 21, and tests the pressure applied and the temperature drift value of the temperature of the measured object 3 measured by the temperature measurement element 1 when the angle between the temperature measurement face 11 and the first surface 21 is 0°, , all of which are recorded in Table 2.

Method of measuring pressure refers to abutting a measurement end against a highest end of the temperature measurement face 11 by using a precision push-pull gauge, and then reading a value displayed on the precision push-pull gauge when the angle between the temperature measurement face 11 and the first surface 21 is from an initial angle to 0°.

Method of measuring a temperature drift value refers to precisely attaching another precision temperature sensor to the measured object 3, and if necessary, applying heat-conducting silicon grease on the contacted surface for more accurate temperature measurement, then reading the displayed temperature values of the precision temperature sensor and the temperature measurement element 1, respectively, at different angles between the temperature measurement face 11 and the first surface 21, and taking an absolute value of its difference as a temperature drift value of a current angle.

In this embodiment, a pressure in the 5N to 98N is qualified. If the pressure is too small, the temperature measurement face 11 cannot be tightly contacted to the measured object 3, and if the pressure is too high, the temperature measurement element 1 may be damaged. The temperature drift value less than 10K is a qualified value. If the temperature drift value is greater than 10K, the actual temperature of the measured object 3 is quite different from the temperature measured by the temperature measurement element 1, thus the actual temperature of the measured object 3 cannot be obtained in time. The temperature control system cannot adjust the temperature of the system in time, resulting in the system temperature rise is excessive and trigger functional failure.

**Table 2: Effects of the height of the temperature measurement face protruding from the first surface on the pressure applied by the temperature measurement face to the measured object and the temperature drift value**

| the ratio of the height of the temperature measurement face 11 protruding from the first surface 21 to the thickness of the temperature measurement element 1 (%) | | | | | | | | | | | | | |
|---|---|---|---|---|---|---|---|---|---|---|---|---|---|
| 0.9 | 1 | 3 | 7 | 9 | 11 | 13 | 15 | 18 | 21 | 24 | 27 | 30 | 31 |

| the pressure applied when the angle between the temperature measurement face 11 and the first surface 21 is 0 ° (N) | | | | | | | | | | | | | |
|---|---|---|---|---|---|---|---|---|---|---|---|---|---|
| 4 | 5 | 7 | 10 | 12 | 40 | 48 | 61 | 75 | 86 | 94 | 96 | 98 | 103 |

| the temperature drift value of the temperature of the measured object 3 measured by the temperature measurement element 1 (K) | | | | | | | | | | | | | |
|---|---|---|---|---|---|---|---|---|---|---|---|---|---|
| 10.7 | 9.9 | 9.0 | 8.4 | 7.6 | 6.4 | 5.8 | 4.6 | 3.7 | 2.9 | 2.4 | 1.6 | 0.7 | 0.3 |

As can be seen from the Table 2, when the height of the temperature measurement face 11 protruding from the first surface 21 accounts for more than 30% of the thickness of the temperature measurement element 1, the pressure applied when the angle between the temperature measurement face 11 and the first surface 21 is 0° exceeds 98N, at this time, the temperature measurement element 1 is subjected to excessive pressure, thus is easily damaged. When the height of the temperature measurement face 11 protruding from the first surface 21 accounts for less than 1%, the pressure applied when the angle between the temperature measurement face 11 and the first surface 21 is 0° is less than 5N, at this time, the temperature measurement face 11 and the measured object 3 cannot be tightly contacted, and the actual temperature of the measured object 3 cannot be accurately measured. In addition, when the angle between the temperature measurement face 11 and the first surface 21 is 0°, the temperature drift value of the temperature of the measured object 3 measured by the temperature measurement element 1 is greater than 10K, at this time, the actual temperature of the measured object 3 is significantly different from the temperature measured by the temperature measurement element 1, thus the actual temperature of the measured object 3 cannot be obtained in time. Therefore, the inventors set the height of the temperature measurement face 11 protruding from the first surface 21 to be 1% to 30% of the thickness of the temperature measurement element 1.

In some embodiments, the area is provided with a groove in which the temperature measurement element 1 is at least partially accommodated. That is to say, an area on the first surface 21 for accommodating the temperature measurement element 1 is groove-shaped, or a part thereof is groove-shaped, and the temperature measurement element 1 may be disposed in the groove.

In an embodiment, the support 2 also has a first end face 23 to which the groove 22 penetrates. The temperature measurement element 1 is capable of being installed and provided in the groove 22 and being pressed by the measured object 3 in the groove 22. If the groove 22 has no other opening, when the temperature measurement element 1 is damaged alone, the measured object 3 must be removed before the temperature measurement element 1 can be taken out and replaced, therefore, a through hole of the groove 22 is provided on the first end face 23, and the temperature measurement element 1 can be installed and repaired through this through hole, without dismantling the entire temperature measuring structure, thus maintenance time can be saved and a secondary damage to the measured object 3 can be prevented.

In addition, the temperature measurement element 1 also needs to be connected with a corresponding control unit by a data line, and the data line may also be led out from this through hole, and the support 2 does not need to be machined such as drilled, thus the processing steps is reduced, the machining time is reduced and the machining costs is saved.

Further, the first end face 23 is further provided with a slot 24, and the slot is provided on both sides of the groove 22. The slot 24 is recessed downwardly on the first end face 23, so as to place the rotation shaft 13 of the temperature measurement element 1.

Further, one end of the temperature measurement element 1 has two opposite rotation shafts 13, and the rotation shafts are provided in the slot 24. The temperature measurement element 1 has the rotation shaft 13 and is disposed in the slot 24, so that the temperature measurement element 1 is capable of being rotated around the rotation shaft 13, thus the temperature measurement face 11 is at a variable angle to the first surface 21.

Further, the temperature measurement element 1 has two opposite second surfaces 12, and the rotation shafts 13 are respectively vertically provided on the second surfaces 12. The rotation shaft 13 is disposed on the second surface 12 and is provided on one end of the temperature measurement element 1, then the rotation shaft 13 can be easily provided on the second surface 12, in addition, the installation is simple and quick.

Further, the temperature measurement element 1 has a second end face 14 provided with a rotation shaft 13, and the rotation shaft 13 is extended perpendicular to the second surface 12. When the rotation shaft 13 is not easily provided on the second surface 12, the rotation shaft 13 can also be provided on the second end face 14 of the temperature measurement element 1, and the rotation shaft 13 can be axially parallel to the second end face 14 and contacted to the second end face 14, or vertically provided on the second end face 14 and connected by a bending portion, and extended in a direction which is perpendicular to the second surface 12.

Further, the slot 24 has a third surface 25, and the third surface 25 is a face parallel to and at the shortest distance from the first surface 21. The slot 24 is recessed downwardly on the first end face 23 to form the third surface 25 in proximity to the first surface 21.

Further, a distance from the first surface 21 to an edge of the rotation shaft 13 is less than a distance from the first surface 21 to the third surface 25.

Further, the distance from the first surface 21 to the edge of the rotation shaft 13 is 0.5 times to 0.8 times of the distance from the first surface 21 to the third surface 25.

Further, the rotation shaft 13 is flexible.

In specific implementation, by providing the third surface 25 on the slot 24, the third surface 25 is a face parallel to and at the closest distance from the first surface 21, the distance from the first surface 21 to the edge of the rotation shaft 13 is less than the distance from the first surface 21 to the third surface 25, and the rotation shaft 13 is flexible. At this time, the temperature measurement element 1 can be made into a cuboid shape or cube shape, when installing the temperature measurement element 1, the rotation shaft 13 may be placed in the slot 24 in an inclined manner with respect to the first end face 23, in order to complete the entry of the temperature measurement element 1 into the groove 22 through the first end face 23. At this time, since the rotation shaft 13 is in contact with the third surface 25 and generates stress, the temperature measurement face 11 is at an angle to the first surface 21, after the measured object 3 is installed, the measured object 3 abuts against the temperature measurement face 11 and generates pressure on the temperature measurement face 11. Since the rotation shaft 13 is flexible, when the measured object is in contact with the temperature measurement face 11 and generates pressure on the temperature measurement face 11, the rotation shaft 13 is in contact with the third surface 25 and generates stress, thus the rotation shaft 13 is deformed. Since the rotation shaft 13 is flexible, in the process in which the rotation shaft 13 attempts to return from the deformed shape or deformed position to the pre-deformed shape or pre-deformed position, the temperature measurement face 11 of the temperature measurement element 1 applies a pressure to the measured object 3, so that the temperature measurement face 11 and the measured object 3 can be more tightly and continuously contacted, thus the temperature measurement element 1 can measure the temperature of the measured object 3 more accurately. With this structure, the temperature measurement face 11 of the temperature measurement element 1 is difficult to detach from the surface of the measured object 3 when the position of the measured object 3 does not change, and in use, the temperature measurement element 1 is not fall out of the groove 22.

In order to verify the effects of the ratio of the distance from the first surface 21 to the edge of the rotation shaft 13 to the distance from the first surface 21 to the third surface 25, on the angle between the temperature measurement face 11 and the first surface 21 and the temperature drift value of the temperature of the measured object 3 measured by the temperature measurement element 1, the inventors selects the same supports 2, with the same distance from the first surface 21 to the third surface 25 on the support 2, and selects different temperature measurement elements 1, with different distances from the first surface 21 to the edge of the rotation shaft 13 on the different temperature measurement elements 1. During the test, the rotation shafts 13 of the different temperature measurement elements 1 are placed in the slot 24, when the temperature measurement element 1 cannot move relative to the first surface 21, the angle between the temperature measurement face 11 and the first surface 21 is measured, the angle in the 1° to 27° is qualified, and the temperature drift value of the temperature of the measured object 3 measured by the temperature measurement element 1 less than 10K is a qualified value, and the temperature drift value is greater than 10K, then the actual temperature of the measured object 3 is significantly different from the temperature measured by the temperature measurement element 1, the actual temperature of the measured object 3 cannot be obtained in time, and the temperature control system cannot adjust the temperature of the system in time, resulting in the system temperature rise is excessive and trigger functional failure.

**Table 3: Effects of the ratio of the distance from the first surface 21 to the edge of the rotation shaft 13 to the distance from the first surface 21 to the third surface 25, on the angle between the temperature measurement face 11 and the first surface 21 and the temperature drift value**

| the ratio of the distance from the first surface 21 to the edge of the rotation shaft 13 to the distance from the first surface 21 to the third surface 25 | | | | | | | |
|---|---|---|---|---|---|---|---|
| 0.3 | 0.4 | 0.5 | 0.6 | 0.7 | 0.8 | 0.9 | 1.0 |

| the angle between the temperature measurement face 11 and the first surface 21 (°) | | | | | | | |
|---|---|---|---|---|---|---|---|
| 33.2 | 28.2 | 26.9 | 22.3 | 15.3 | 7.5 | 0.3 | 0 |

| the temperature drift value of the temperature of the measured object 3 measured by the temperature measurement element 1 (K) | | | | | | | |
|---|---|---|---|---|---|---|---|
| 0.2 | 1.6 | 3.8 | 6.7 | 8.1 | 9.8 | 10.6 | 11.3 |

As can be seen from the Table 3, when the distance from the first surface 21 to the edge of the rotation shaft 13 accounts for more than 0.9 of the distance from the first surface 21 to the third surface 25, the angle between the temperature measurement face 11 and the first surface 21 is less than 1°, at this time, the angle between the temperature measurement face 11 and the first surface 21 is unqualified, and the temperature drift value of the temperature of the measured object 3 measured by the temperature measurement element 1 is also greater than 10K and is unqualified. When the distance from the first surface 21 to the edge of the rotation shaft 13 accounts for less than 0.5 times of the distance from the first surface 21 to the third surface 25, the angle between the temperature measurement face 11 and the first surface 21 is greater than 27°, at this time, the temperature measuring structure is unqualified. When the distance from the first surface 21 to the edge of the rotation shaft 13 accounts for 0.5 times to 0.8 times of the distance from the first surface 21 to the third surface 25, the angle between the temperature measurement face 11 and the first surface 21 is between 1 ° and 27 °, and when the ratio is greater than 0.8, the temperature drift value of the temperature of the measured object 3 measured by the temperature measurement element 1 is unqualified. Therefore, the inventors set that the distance from the first surface 21 to the edge of the rotation shaft 13 is 0.5 times to 0.8 times of the distance from the first surface 21 to the third surface 25.

In an embodiment, the groove 22 has a bottom face 26, the bottom face 26 is provided with a jaw 27, the hook 28 is disposed on the jaw 27, and the hook 28 protrudes from the bottom face 26.

Further, the hook 28 has a limiting face 29 which is perpendicular to the bottom face 26 or is an acute angle to the bottom face 26.

Further, the temperature measurement element 1 has a second end face 14, and the limiting face 29 is in contact with the second end face 14 to restrict the temperature measurement element 1 from detaching from the groove 22.

In specific implementation, the jaw 27 is disposed on the bottom face 26, the hook 28 is disposed on the jaw 27, the hook 28 is provided with the limiting face 29 which is perpendicular to the bottom face 26 or at an acute angle to the bottom face 26, so that the second end face 14 of the temperature measurement element 1 is in contact with the limiting face 29 to restrict the temperature measurement element 1 from detaching from the groove 22, and the temperature measurement element 1 can be more firmly fixed in the groove 22 to prevent the temperature measurement element 1 from detaching from the groove 22, and the temperature measuring structure can be applied in more environments as required.

Further, the jaw 27 is flexible and the hook 28 is not protruded from protruding from the bottom face 26 under external force.

In specific implementation, the temperature measurement element 1 can be easily taken out by applying an external force to the flexible jaw 27, without moving the measured object, which facilitates the subsequent replacement of the temperature measurement element 1 as needed, reduces procedures and saves time.

In specific implementation, the cross-section shape of the temperature measurement element 1 perpendicular to the temperature measurement face 11 is not particularly limited, as long as the temperature measurement element 1 can enter the groove 22 through the first surface 21.

In an embodiment, a cross-sectional shape of the temperature measurement element 1 perpendicular to the temperature measurement face 11 is a rectangle, a quadrangle and a polygon, and can be designed into different shapes as needed to match the actual use environment.

In an embodiment, a width of the groove 22 is greater than or equal to a widest portion of the temperature measurement element 1 parallel to the temperature measurement face 11.

In specific implementation, the width of the groove 22 is greater than or equal to the widest portion of the temperature measurement element 1 parallel to the temperature measurement face 11, as long as the temperature measurement element 1 can enter the groove 22 through the first surface 21.

In an embodiment, a cross-sectional shape of the rotation shaft 13 is a circle, an ellipse, a flat, a triangle, a rectangle, a quadrangle and a polygon. The cross-sectional shape of the rotation shaft 13 may be set to various different cross-sectional shapes based on the different shapes of the temperature measurement element 1 and the different machining manner of the rotation shaft 13, so as to facilitate a mating connection to the groove 22.

In an embodiment, the temperature measurement element 1 is an NTC (Negative Temperature Coefficient) temperature sensor or a PTC (Positive Temperature Coefficient) temperature sensor.

In specific implementation, the temperature measurement element 1 is an NTC temperature sensor or a PTC temperature sensor. Advantages of using these two temperature sensors is that such temperature sensors are small in size with a resistance value arbitrarily selected between 0.1kΩ and 100kQ, are capable of measuring gaps that cannot be measured by other thermometers, and are easy to use. And, such temperature sensors are easy to be machined into complex shapes, may be mass-produced with good stability, strong overload capacity, suitable for a product that requires small size and stable performance such as an adapter.

In some embodiments, the temperature measurement element 1 is a bimetallic temperature sensor. The bimetallic temperature sensor is made of two metals with different expansion coefficients. In a case where the temperature changes, a metal with a large expansion coefficient may be bent, so has good vibration resistance and is suitable for electric vehicles.

Further, when a change in temperature of an outside is 1°C, a deformation of metal of the bimetallic temperature sensor is less than or equal to 1mm. The smaller the deformation of the bimetallic temperature sensor is, the more accurate the temperature measurement effect is, thus the deformation of the metal of the bimetallic temperature sensor selected by the inventors is less than or equal to 1mm.

The smaller the deformation of the metal is, the closer the temperature value measured by the bimetallic temperature sensor is to the real value. In order to verify the relationship between the deformation of the metal and the temperature measurement value, the inventors performs relevant tests. The testing method includes: setting the same temperature for the measured object 3, choosing the same supports, choosing bimetallic temperature sensors with different metal deformations, recording the temperature values measured in different conditions and taking an absolute value of the difference from an actual temperature, where the absolute value less than or equal to 0.2 °C is qualified. The results are shown in Table 4.

**Table 4: Effects of bimetallic temperature sensors with different metal deformations on the temperature measurement effect**

| | | | | | | | | | | | |
|---|---|---|---|---|---|---|---|---|---|---|---|
| metal deformation (mm) | 0.2 | 0.3 | 0.4 | 0.5 | 0.6 | 0.7 | 0.8 | 0.9 | 0.95 | 1 | 1.05 |
| difference (°C) | 0.1 | 0.1 | 0.11 | 0.12 | 0.13 | 0.14 | 0.16 | 0.18 | 0.2 | 0.2 | 0.21 |

As can be seen from the Table 4, after the metal deformation of the bimetallic temperature sensor is greater than 1mm, the measured temperature value and the actual temperature value is too large difference, as unqualified, thus the inventor chose the bimetallic temperature sensor in the outside temperature change amount of 1 °C, which metal deformation is less than or equal to 1mm..

In an embodiment, the temperature measurement element 1 has a metal housing, and a material of the metal housing including silver or copper. The thermal conductivity of common metal silver is 429; the thermal conductivity of common metal copper is 401; the thermal conductivity of common metal gold is 317; the thermal conductivity of common metal aluminum is 237; the thermal conductivity of common metal iron is 80; the thermal conductivity of common metal tin is 67; and the thermal conductivity of common metal lead is 34.8.

In specific implementation, the higher the thermal conductivity is, the closer the temperature transmitted to the temperature measurement element 1 is to the real value. As can be seen from the coefficients, silver has the highest thermal conductivity, and copper has a thermal conductivity close to silver, and both silver and copper have much higher thermal conductivity than other metals, thus the inventors exemplarily select the material of the metal housing including silver or copper. Considering that the price of silver is much higher than that of copper, a significant increase in cost occurs, and therefore, the most exemplary option is to includes copper.

### Embodiment 2

The present disclosure provides a charging device, including the measured object 3 and the temperature measuring structure according to the Embodiment 1.

Further, when assembling the charging device, the temperature measurement element 1 abuts against the measured object 3, and the temperature measurement face 11 is in close contact with the measured object 3 and applies pressure to the measured object 3, and the temperature measurement element 1 measures a temperature of the measured object 3.

In specific implementation, when assembling and using the charging device, the stress is generated between the measured object 3 and the temperature measurement element 1 via the rotation shaft 13 and the third surface 25, so that the temperature measurement face 11 is at an angle to the first surface 21. At this time, pressure is generated between the temperature measurement face 11 and the measured object 3, so that the temperature measurement element 1 is firmly fixed in the support 2, and the temperature measurement face 11 can be continuously and tightly contacted to the measured object 3.

In some embodiments, a contact area between the temperature measurement face 11 and the measured object 3 is 0.1% to 95% of a surface area of the measured object 3.

Further, the contact area between the temperature measurement face 11 and the measured object 3 is 1% to 85% of the surface area of the measured object 3.

In order to verify the effects of the contact area between the temperature measurement face 11 and the measured object 3 on the temperature measurement effect, the inventors selects the measured objects 3 having the same size and different contact areas between the temperature measurement face 11 and the measured object 3 to measure the temperature of the measured obj ect 3, and uses the same pressure to contact the temperature measurement face 11 with the measured object 3, sets the measured object 3 with the same temperature, then uses the temperature measurement element 1 to measure the temperature of the measured object 3 and took an absolute value of the difference from an actual temperature, where the absolute value greater than 2 °C is unqualified. The results are recorded in Table 5.

**Table 5: Effects of the ratio of contact area between the temperature measurement face and the measured object to the surface area of the measured object on the temperature measurement effect**

| the ratio of the contact area between the temperature measurement face and the measured object to the surface area of the measured object (%) | | | | | | | | | | | | | |
|---|---|---|---|---|---|---|---|---|---|---|---|---|---|
| 0.08 | 0.1 | 0.8 | 1 | 5 | 10 | 20 | 35 | 45 | 60 | 75 | 85 | 95 | 96 |

| the difference between the measured temperature and the actual temperature (°C) | | | | | | | | | | | | | |
|---|---|---|---|---|---|---|---|---|---|---|---|---|---|
| 2.1 | 2 | 1.3 | 1 | 0.8 | 0.7 | 0.6 | 0.6 | 0.5 | 0.4 | 0.3 | 0.1 | 0 | 0 |

As can be seen from the Table 5, when the contact area between the temperature measurement face 11 and the measured object 3 is less than 0.1% of the surface area of the measured object, the temperature difference exceeds 2 °C, after the contact area between the temperature measurement face 11 and the measured object 3 is more than 95% of the area of the measured object 3, the temperature measured by the temperature measurement element 1 is the same as the actual temperature, successive increase in the contact area is no longer necessary. Therefore, the inventors set the contact area between the temperature measurement face 11 and the measured object 3 to be 0.1% to 95%, as can be seen from the Table 5, a better temperature measurement effect can be obtained after the contact area between the temperature measurement face 11 and the measured object 3 is greater than or equal to 1% of the surface are of the measured object, and it is also an ideal condition that the contact area between the temperature measurement face 11 and the measured object 3 is less than or equal to 85% of the surface area of the measured object. Therefore, the inventors further exemplarily select that the contact area between the temperature measurement face 11 and the measured object 3 is 1% to 85% of the surface area of the measured object.

Further, the pressure applied by the temperature measurement face 11 to the measured object 3 is 5N to 98N.

In order to verify the effects of the pressure applied by the temperature measurement face 11 to the measured object 3 on the measurement result by the temperature measurement element 1 and the damage to the temperature measurement element 1, the inventors selects the same measured objects 3 and temperature measurement elements 1, selects different pressures of the temperature measurement face 11 on the measured object 3, and tests the temperature rise value measured by the temperature measurement element 1 and the damage to the temperature measurement element 1 under different pressure conditions. In this embodiment, the temperature rise value greater than 12K is unqualified and it is unqualified if the temperature measuring element 1 is damaged.

Method of measuring a temperature rise value refers to obtaining a temperature rise value by applying the same heat to the measured object 3 to keep the temperature consistent, then reading the temperature measured by the temperature measurement element 1 in contact with the measured object 3, and making a difference from an initial temperature, and recording these parameters in Table 6.

Method of measuring damage to the temperature measurement element 1 refers to performing 50 pressure tests in a case where the measured object 3 applies different pressures to the temperature measurement element 1, and observing the damage to the temperature measurement element 1.

**Table 6: Effects of the different pressures applied by the temperature measurement face 11 to the measured object 3 on the temperature rise value**

| the pressure applied by the temperature measurement face 11 to the measured object (N) | | | | | | | | | | | |
|---|---|---|---|---|---|---|---|---|---|---|---|
| 1 | 3 | 5 | 20 | 35 | 50 | 65 | 73 | 89 | 98 | 101 | 106 |

| the temperature rise value measured by the temperature measurement element 1 (K) | | | | | | | | | | | |
|---|---|---|---|---|---|---|---|---|---|---|---|
| 18.3 | 14.5 | 11.1 | 10.5 | 8.4 | 7.0 | 5.2 | 4.6 | 3.5 | 2.5 | 1.3 | 0.8 |

| the number of damages to the temperature measurement element 1 | | | | | | | | | | | |
|---|---|---|---|---|---|---|---|---|---|---|---|
| 0 | 0 | 0 | 0 | 0 | 0 | 0 | 0 | 0 | 0 | 2 | 3 |

As can be seen from the Table 6, when the pressure applied by the temperature measurement face 11 to the measured object 3 is less than 5N, the temperature rise value measured by the temperature measurement element 1 exceeds the required value, and does not meet the standard requirements. However, when the pressure applied by the temperature measurement face 11 to the measured object is greater than 98N, the number of damages to the temperature measurement element 1 is two or more, and does not meet the standard requirements. Therefore, the inventors set the pressure applied by the measured object 3 to the temperature measurement element 1 to be 5N to 98N.

### Example 3

The present disclosure also provides a motor vehicle including the temperature measuring structure or the charging device.

## Claims

1. A temperature measuring structure, comprising: a support (2) and a temperature measurement element (1), wherein the support (2) has a first surface (21), the first surface (21) is provided with an area accommodating the temperature measurement element (1); the temperature measurement element (1) has a temperature measurement face (11), the temperature measurement face (11) at least partially protrudes from the first surface (21), and the temperature measurement face (11) is at a variable angle to the first surface (21),
wherein the area is provided with a groove (22) in which the temperature measurement element (1) is at least partially accommodated, and the support (2) further has a first end face (23) to which the groove (22) penetrates;
**characterized in that** the first end face (23) is further provided with a slot (24), and the slot (24) is provided on both sides of the groove (22), one end of the temperature measurement element (1) has two opposite rotation shafts (13), and the rotation shafts (13) are provided in the slot (24), the temperature measurement element (1) has two opposite second surfaces (12), and the rotation shafts (13) are respectively vertically provided on the second surfaces (12); the temperature measurement element (1) has a second end face (14) provided with the rotation shaft (13), and the rotation shaft (13) is extended perpendicular to the second surface (12); the slot (24) has a third surface (25), and the third surface (25) is a face parallel to and at the shortest distance from the first surface (21); a distance from the first surface (21) to an edge of the rotation shaft (13) is less than a distance from the first surface (21) to the third surface (25), the rotation shaft (13) is flexible, wherein after a measured object (3) is installed, the measured object (3) abuts against the temperature measurement face (11) and generates pressure on the temperature measurement face (11), the rotation shaft (13) is in contact with the third surface (25) and generates stress, so that the rotation shaft (13) is deformed; and in a process in which the rotation shaft (13) attempts to return from a deformed shape or a deformed position to a pre-deformed shape or a pre-deformed position, the temperature measurement face (11) of the temperature measurement element (1) applies a pressure to the measured object (3), so that the temperature measurement face (11) and the measured object (3) are capable of being tightly and continuously contacted.

2. The temperature measuring structure according to claim 1, wherein the angle between the temperature measurement face (11) and the first surface (21) is of 1° to 27°;
or
wherein a height of the temperature measurement face (11) protruding from the first surface (21) is of 1% to 30% of a thickness of the temperature measurement element (1);
or
wherein a cross-sectional shape of the temperature measurement element (1) perpendicular to the temperature measurement face (11) is a rectangle, a quadrangle and a polygon;
or
wherein the temperature measurement element (1) is an NTC temperature sensor or a PTC temperature sensor;
or
wherein the temperature measurement element (1) has a metal housing, and a material of the metal housing comprises silver or copper.

3. The temperature measuring structure according to claim 1, wherein
the distance from the first surface (21) to the edge of the rotation shaft (13) is 0.5 times to 0.8 times of the distance from the first surface (21) to the third surface (25).

4. The temperature measuring structure according to claim 1, wherein the groove (22) has a bottom face (26), the bottom face (26) is provided with a jaw (27), a hook (28) is disposed on the jaw (27), and the hook (28) protrudes from the bottom face (26).

5. The temperature measuring structure according to claim 4, wherein the hook (28) has a limiting face (29) which is perpendicular to the bottom face (26) or is at an acute angle to the bottom face (26);
preferably wherein
the temperature measurement element (1) has a second end face (14), and the limiting face (29) is in contact with the second end face (14) to restrict the temperature measurement element (1) from detaching from the groove (22).

6. The temperature measuring structure according to claim 4, wherein the jaw (27) is flexible and the hook (28) is not protruded from the bottom face (26) under external force.

7. The temperature measuring structure according to claim 1, wherein a width of the groove (22) is greater than or equal to a widest portion of the temperature measurement element (1) parallel to the temperature measurement face (11).

8. The temperature measuring structure according to claim 1, wherein the temperature measurement element (1) is a bimetallic temperature sensor;
preferably wherein
when a change in temperature of an outside is 1°C, a deformation of metal of the bimetallic temperature sensor is less than or equal to 1mm.

9. A charging device, comprising a measured object (3) and the temperature measuring structure according to any one of claims 1 to 8.

10. The charging device according to claim 9, wherein when assembling the charging device, the temperature measurement element (1) abuts against the measured object (3), and the temperature measurement face (11) is in close contact with the measured object (3) and applies pressure to the measured object (3), and the temperature measurement element (1) measures a temperature of the measured object (3);
preferably wherein
a contact area between the temperature measurement face (11) and the measured object (3) is 0.1% to 95% of a surface area of the measured object (3);
preferably wherein
the contact area between the temperature measurement face (11) and the measured object (3) is 1% to 85% of the surface area of the measured object (3).

11. The charging device according to claim 9, wherein the pressure applied by the temperature measurement face (11) to the measured object (3) is 5N to 98N.

12. A motor vehicle comprising: the temperature measuring structure according to any one of claims 1 to 8 or the charging device according to any one of claims 9 to 11.

## Patentansprüche

1. Temperaturmessstruktur, aufweisend: einen Träger (2) und ein Temperaturmesselement (1), wobei der Träger (2) eine erste Oberfläche (21) aufweist, die erste Oberfläche (21) mit einem Bereich versehen ist, der das Temperaturmesselement (1) aufnimmt; das Temperaturmesselement (1) eine Temperaturmessfläche (11) aufweist, die Temperaturmessfläche (11) zumindest teilweise aus der ersten Oberfläche (21) herausragt und die Temperaturmessfläche (11) in einem variablen Winkel zur ersten Oberfläche (21) steht,
wobei der Bereich mit einer Nut (22) versehen ist, in der das Temperaturmesselement (1) zumindest teilweise aufgenommen ist, und der Träger (2) ferner eine erste Stirnfläche (23) aufweist, in die die Nut (22) hineinragt;
**dadurch gekennzeichnet, dass** die erste Stirnfläche (23) ferner mit einem Schlitz (24) versehen ist und der Schlitz (24) auf beiden Seiten der Nut (22) vorgesehen ist, ein Ende des Temperaturmesselements (1) zwei gegenüberliegende Drehschäfte (13) aufweist und die Drehschäfte (13) in dem Schlitz (24) vorgesehen sind, das Temperaturmesselement (1) zwei gegenüberliegende zweite Oberflächen (12) aufweist und die Drehschäfte (13) jeweils vertikal an den zweiten Oberflächen (12) vorgesehen sind; das Temperaturmesselement (1) eine zweite Stirnfläche (14) aufweist, die mit dem Drehschaft (13) versehen ist, und der Drehschaft (13) senkrecht zur zweiten Oberfläche (12) verläuft; der Schlitz (24) eine dritte Oberfläche (25) aufweist, und die dritte Oberfläche (25) eine Oberfläche ist, die parallel zur ersten Oberfläche (21) und in kürzester Entfernung von dieser angeordnet ist; ein Abstand von der ersten Oberfläche (21) zu einer Kante des Drehschaftes (13) kleiner ist als ein Abstand von der ersten Oberfläche (21) zur dritten Oberfläche (25), der Drehschaft (13) flexibel ist, wobei, nachdem ein Messobjekt (3) installiert wurde, das Messobjekt (3) an der Temperaturmessfläche (11) anliegt und Druck auf die Temperaturmessfläche (11) ausübt, der Drehschaft (13) mit der dritten Oberfläche (25) in Kontakt steht und Spannung erzeugt, so dass der Drehschaft (13) verformt wird; und in einem Prozess, in dem der Drehschaft (13) versucht, von einer verformten Form oder einer verformten Position zu einer vorverformten Form oder einer vorverformten Position zurückzukehren, die Temperaturmessfläche (11) des Temperaturmesselements (1) einen Druck auf das Messobjekt (3) ausübt, so dass die Temperaturmessfläche (11) und das Messobjekt (3) fest und kontinuierlich in Kontakt gebracht werden können.

2. Temperaturmessstruktur nach Anspruch 1, bei der der Winkel zwischen der Temperaturmessfläche (11) und der ersten Oberfläche (21) 1⁰ bis 27° beträgt;
oder
bei der die Höhe der Temperaturmessfläche (11), die aus der ersten Oberfläche (21) herausragt, 1 % bis 30 % der Dicke des Temperaturmesselements (1) beträgt;
oder
bei der eine Querschnittsform des Temperaturmesselements (1) senkrecht zur Temperaturmessfläche (11) ein Rechteck, ein Viereck und ein Polygon ist;
oder
bei der das Temperaturmesselement (1) ein NTC-Temperatursensor oder ein PTC-Temperatursensor ist;
oder
bei der das Temperaturmesselement (1) ein Metallgehäuse aufweist und ein Material des Metallgehäuses Silber oder Kupfer aufweist.

3. Temperaturmessstruktur nach Anspruch 1, bei der der Abstand von der ersten Oberfläche (21) zum Rand des Drehschaftes (13) das 0,5- bis 0,8-fache des Abstands von der ersten Oberfläche (21) zur dritten Oberfläche (25) beträgt.

4. Temperaturmessstruktur nach Anspruch 1, bei der die Nut (22) eine Bodenfläche (26) aufweist, die Bodenfläche (26) mit einer Klemme (27) versehen ist, ein Haken (28) an der Klemme (27) angeordnet ist und der Haken (28) aus der Bodenfläche (26) herausragt.

5. Temperaturmessvorrichtung nach Anspruch 4, bei der der Haken (28) eine Begrenzungsfläche (29) aufweist, die senkrecht zur Bodenfläche (26) oder in einem spitzen Winkel zur Bodenfläche (26) steht;
vorzugsweise bei der
das Temperaturmesselement (1) eine zweite Stirnfläche (14) aufweist und die Begrenzungsfläche (29) mit der zweiten Stirnfläche (14) in Kontakt steht, um zu verhindern, dass sich das Temperaturmesselement (1) aus der Nut (22) löst.

6. Temperaturmessstruktur nach Anspruch 4, bei der die Klemme (27) flexibel ist und der Haken (28) unter Einwirkung einer äußeren Kraft nicht aus der Bodenfläche (26) herausragt.

7. Temperaturmessstruktur nach Anspruch 1, bei der die Breite der Nut (22) größer oder gleich dem breitesten Abschnitt des Temperaturmesselements (1) parallel zur Temperaturmessfläche (11) ist.

8. Temperaturmessstruktur nach Anspruch 1, bei der das Temperaturmesselement (1) ein Bimetall-Temperatursensor ist;
vorzugsweise bei der
bei einer Temperaturänderung der Umgebung von 1 °C die Verformung des Metalls des Bimetall-Temperatursensors kleiner oder gleich 1 mm ist.

9. Ladevorrichtung, aufweisend ein Messobjekt (3) und die Temperaturmessstruktur gemäß einem der Ansprüche 1 bis 8.

10. Ladevorrichtung nach Anspruch 9, bei der beim Zusammenbau der Ladevorrichtung das Temperaturmesselement (1) an dem Messobjekt (3) anliegt und die Temperaturmessfläche (11) in engem Kontakt mit dem Messobjekt (3) steht und Druck auf das Messobjekt (3) ausübt, und das Temperaturmesselement (1) eine Temperatur des Messobjekts (3) misst;
vorzugsweise bei der
eine Kontaktfläche zwischen der Temperaturmessfläche (11) und dem Messobjekt (3) 0,1 % bis 95 % der Oberfläche des Messobjekts (3) beträgt;
vorzugsweise bei der
die Kontaktfläche zwischen der Temperaturmessfläche (11) und dem Messobjekt (3) 1 % bis 85 % der Oberfläche des Messobjekts (3) beträgt.

11. Ladevorrichtung nach Anspruch 9, bei der der von der Temperaturmessfläche (11) auf das Messobjekt (3) ausgeübte Druck 5 N bis 98 N beträgt.

12. Kraftfahrzeug, aufweisend: die Temperaturmessstruktur gemäß einem der Ansprüche 1 bis 8 oder die Ladevorrichtung gemäß einem der Ansprüche 9 bis 11.

## Revendications

1. Structure de mesure de température, comprenant: un support (2) et un élément de mesure de température (1), le support (2) présentant une première surface (21), la première surface (21) étant pourvue d'une zone qui reçoit l'élément de mesure de température (1); l'élément de mesure de température (1) comportant une surface de mesure de température (11), la surface de mesure de température (11) dépassant au moins partiellement de la première surface (21) et la surface de mesure de température (11) formant un angle variable par rapport à la première surface (21),
la zone étant pourvue d'une rainure (22) dans laquelle l'élément de mesure de température (1) est au moins partiellement logé, et le support (2) présentant en outre une première surface frontale (23) dans laquelle la rainure (22) fait saillie;
**caractérisé en ce que** la première surface frontale (23) est en outre pourvue d'une fente (24) et la fente (24) est prévue des deux côtés de la rainure (22), une extrémité de l'élément de mesure de température (1) comporte deux tiges de rotation opposés (13) et les tiges de rotation (13) sont prévus dans la fente (24), l'élément de mesure de température (1) comporte deux deuxièmes surfaces opposées (12) et les tiges de rotation (13) sont prévus verticalement sur les deuxièmes surfaces (12); l'élément de mesure de température (1) comporte une deuxième surface frontale (14) qui est pourvue de la tige de rotation (13), et la tige de rotation (13) s'étend perpendiculairement à la deuxième surface (12); la fente (24) présente une troisième surface (25), et la troisième surface (25) est une surface qui est parallèle à la première surface (21) et disposée à la distance la plus courte de celle-ci; la distance entre la première surface (21) et un bord de la tige de rotation (13) est inférieure à la distance entre la première surface (21) et la troisième surface (25), la tige de rotation (13) est flexible, après l'installation d'un objet à mesurer (3), l'objet à mesurer (3) repose contre la surface de mesure de température (11) et exerce une pression sur la surface de mesure de température (11), la tige de rotation (13) est en contact avec la troisième surface (25) et génère une tension, de sorte que la tige de rotation (13) est déformé; et dans un processus dans lequel la tige de rotation (13) tente de revenir d'une forme déformée ou d'une position déformée à une forme préformée ou à une position préformée, la surface de mesure de température (11) de l'élément de mesure de température (1) exerce une pression sur l'objet à mesurer (3) de telle sorte que la surface de mesure de température (11) et l'objet à mesurer (3) puissent être mis en contact de manière ferme et continue.

2. Structure de mesure de température selon la revendication 1, dans laquelle l'angle entre la surface de mesure de température (11) et la première surface (21) est compris entre 1° et 27°;
ou
dans laquelle la hauteur de la surface de mesure de température (11) qui dépasse de la première surface (21) est comprise entre 1 % et 30 % de l'épaisseur de l'élément de mesure de température (1);
ou
dans laquelle une forme en coupe transversale de l'élément de mesure de température (1) perpendiculaire à la surface de mesure de température (11) est un rectangle, un carré et un polygone;
ou
dans lequel l'élément de mesure de température (1) est un capteur de température NTC ou un capteur de température PTC;
ou
dans laquelle l'élément de mesure de température (1) comporte un boîtier métallique et le matériau du boîtier métallique est de l'argent ou du cuivre.

3. Structure de mesure de température selon la revendication 1, dans laquelle la distance entre la première surface (21) et le bord de la tige de rotation (13) est comprise entre 0,5 et 0,8 fois la distance entre la première surface (21) et la troisième surface (25).

4. Structure de mesure de température selon la revendication 1, dans laquelle la rainure (22) présente une surface de fond (26), la surface de fond (26) est pourvue d'une pince (27), un crochet (28) est disposé sur la pince (27) et le crochet (28) dépasse de la surface de fond (26).

5. Structure de mesure de température selon la revendication 4, dans lequel le crochet (28) présente une surface de limitation (29) qui est perpendiculaire à la surface de fond (26) ou forme un angle aigu avec la surface de fond (26);
de préférence dans lequel
l'élément de mesure de température (1) présente une deuxième surface frontale (14) et la surface de délimitation (29) est en contact avec la deuxième surface frontale (14) afin d'empêcher l'élément de mesure de température (1) de se détacher de la rainure (22).

6. Structure de mesure de température selon la revendication 4, dans laquelle la pince (27) est flexible et le crochet (28) ne dépasse pas de la surface de base (26) sous l'effet d'une force extérieure.

7. Structure de mesure de température selon la revendication 1, dans laquelle la largeur de la rainure (22) est supérieure ou égale à la partie la plus large de l'élément de mesure de température (1) parallèlement à la surface de mesure de température (11).

8. Structure de mesure de température selon la revendication 1, dans laquelle l'élément de mesure de température (1) est un capteur de température bimétallique;
de préférence dans laquelle
lors d'un changement de température de l'environnement de 1 °C, la déformation du métal du capteur de température bimétallique est inférieure ou égale à 1 mm.

9. Dispositif de charge comprenant un objet à mesurer (3) et la structure de mesure de température selon l'une des revendications 1 à 8.

10. Dispositif de charge selon la revendication 9, dans lequel, lors de l'assemblage du dispositif de charge, l'élément de mesure de température (1) repose contre l'objet à mesurer (3) et la surface de mesure de température (11) est en contact étroit avec l'objet à mesurer (3) et exerce une pression sur l'objet à mesurer (3), et l'élément de mesure de température (1) mesure une température de l'objet à mesurer (3) ;
de préférence lorsque
une surface de contact entre la surface de mesure de température (11) et l'objet à mesurer (3) représente 0,1 % à 95 % de la surface de l'objet à mesurer (3);
de préférence,
la surface de contact entre la surface de mesure de température (11) et l'objet à mesurer (3) représente 1 % à 85 % de la surface de l'objet à mesurer (3).

11. Dispositif de charge selon la revendication 9, dans lequel la pression exercée par la surface de mesure de température (11) sur l'objet à mesurer (3) est comprise entre 5 N et 98 N.

12. Véhicule automobile comprenant: la structure de mesure de température selon l'une des revendications 1 à 8 ou le dispositif de charge selon l'une des revendications 9 à 11.
